# EUROPEAN PATENT APPLICATION

(11) **EP 4 467 513 A2**
(43) Date of publication of application: **27.11.2024**
(21) Application number: 24162884.1
(22) Date of filing: 12.03.2024
(51) Int. Cl.: C01B 3/00

(54) **HYDRIDE-ION-CONDUCTING DEVICE AND METHOD FOR MANUFACTURING HYDRIDE-ION-CONDUCTING DEVICE**

(30) Priority: 24.05.2023 JP 2023085653; 24.05.2023 JP 2023085654
(71) Applicant: Kabushiki Kaisha Toshiba, Tokyo 105-0023 (JP)
(72) Inventor: NAKA, Tomomichi, Tokyo, 105-0023 (JP)
(74) Representative: Hoffmann Eitle

(57) **Abstract**

A hydride-ion-conducting device includes a first layer, a first protective layer, a second protective layer and a conductive layer. The first layer includes a hydride-ion-conducting material. The first layer includes a protrusion protruding in an upward direction. The first protective layer is located on the first layer. The first protective layer includes an upper surface extending in a first direction crossing the upward direction. The upper surface of the first protective layer is aligned with an upper end of the protrusion in the first direction. The second protective layer is located on the first layer and on the first protective layer. The conductive layer is located on the second protective layer.

## Description

### FIELD

Embodiments described herein relate generally to a hydride-ion-conducting device and a method for manufacturing a hydride-ion-conducting device.

### BACKGROUND

A hydride-ion-conducting material has been developed in which hydride ions (H⁻ anions of hydrogen) can move inside the hydride-ion-conducting material. The hydride-ion-conducting material has high ion conductivity for hydride ions. Therefore, research is being performed to apply hydride-ion-conducting materials to new devices.

### BRIEF DESCRIPTION OF THE DRAWINGS

FIG. 1 is a schematic cross-sectional view illustrating a hydride-ion-conducting device according to an embodiment;
FIG. 2 is a schematic cross-sectional view illustrating the hydride-ion-conducting device according to the embodiment;
FIGS. 3A to 3E are schematic cross-sectional views illustrating a method for manufacturing the hydride-ion-conducting device according to the embodiment;
FIG. 4 is a schematic view describing an operation of the hydride-ion-conducting device according to the embodiment;
FIG. 5 is a schematic cross-sectional view illustrating the hydride-ion-conducting device according to the embodiment;
FIG. 6 is a schematic cross-sectional view illustrating a hydride-ion-conducting device according to the embodiment;
FIG. 7 is a schematic cross-sectional view illustrating the hydride-ion-conducting device according to the embodiment;
FIGS. 8A to 8C are schematic cross-sectional views illustrating a method for manufacturing the hydride-ion-conducting device according to the embodiment;
FIG. 9 is a schematic view describing an operation of the hydride-ion-conducting device according to the embodiment; and
FIG. 10 is a schematic cross-sectional view illustrating the hydride-ion-conducting device according to the embodiment.

### DETAILED DESCRIPTION

A hydride-ion-conducting device according to one embodiment, includes a first layer, a first protective layer, a second protective layer and a conductive layer. The first layer includes a hydride-ion-conducting material. The first layer includes a protrusion protruding in an upward direction. The first protective layer is located on the first layer. The first protective layer includes an upper surface extending in a first direction crossing the upward direction. The upper surface of the first protective layer is aligned with an upper end of the protrusion in the first direction. The second protective layer is located on the first layer and on the first protective layer. The conductive layer is located on the second protective layer.

A hydride-ion-conducting device according to one embodiment, includes a first layer, a protective layer, and a conductive layer. The first layer includes a hydride-ion-conducting material. The first layer includes an upper surface including an unevenness. The protective layer is located on the upper surface of the first layer. The conductive layer is located on the protective layer. An upper surface of the protective layer includes an unevenness following the unevenness of the upper surface of the first layer.

Various embodiments are described below with reference to the accompanying drawings.

The drawings are schematic and conceptual; and the relationships between the thickness and width of portions, the proportions of sizes among portions, etc., are not necessarily the same as the actual values. The dimensions and proportions may be illustrated differently among drawings, even for identical portions.

In the specification and drawings, components similar to those described previously or illustrated in an antecedent drawing are marked with like reference numerals, and a detailed description is omitted as appropriate.

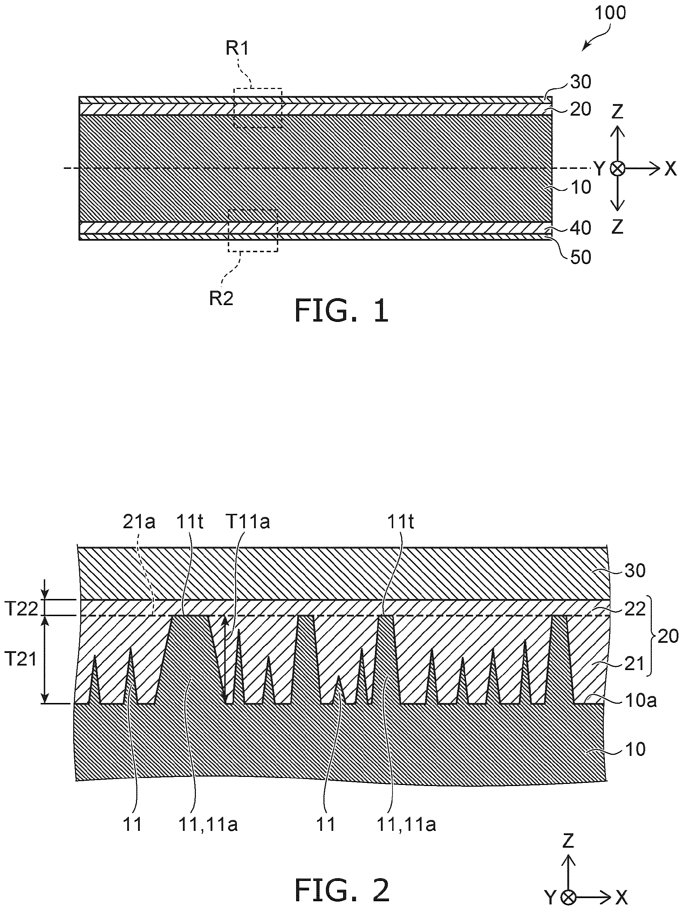

FIG. 1 is a schematic cross-sectional view illustrating a hydride-ion-conducting device according to an embodiment. As illustrated in FIG. 1, the hydride-ion-conducting device 100 according to the embodiment includes a first layer 10 including a hydride-ion-conducting material, a protective film 20 located on the first layer 10, and a conductive layer 30 located on the protective film 20. In the example, a protective film 40 is located under the first layer 10; and a conductive layer 50 is located under the protective film 40.

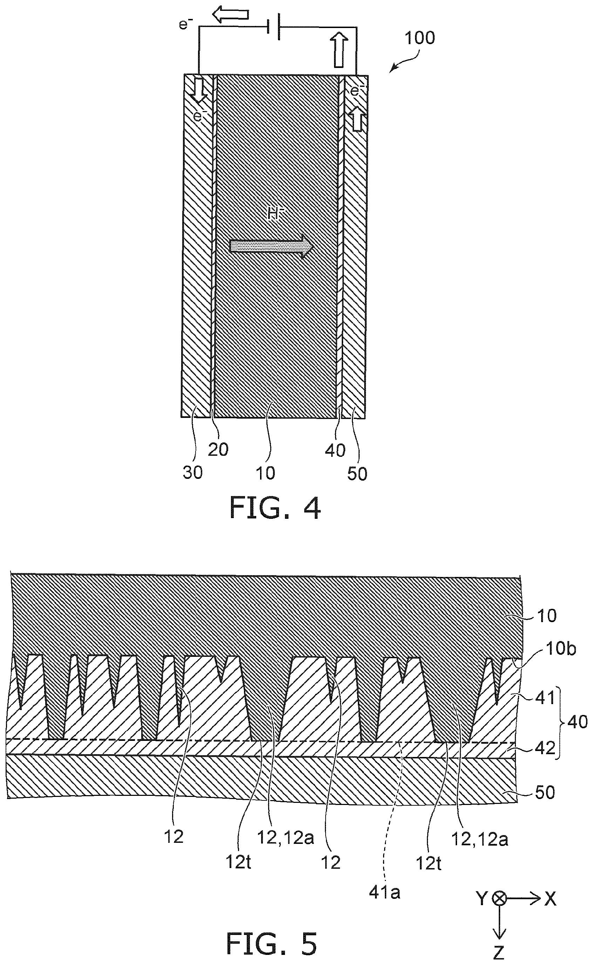

As described below, the surface of the first layer 10 includes an unevenness, but the unevenness is not illustrated for convenience in FIG. 1 (and FIG. 4).

In the description of the embodiment, the direction from the first layer 10 toward the conductive layer 30 is taken as a Z-direction; one direction perpendicular to the Z-direction is taken as an X-direction (a first direction); and a direction perpendicular to the Z-direction and X-direction is taken as a Y-direction. In the description, the direction from the first layer 10 toward the conductive layer 30 is defined as "up/upward/higher than", and the opposite direction is defined as "down/downward/lower than". These directions are based on the relative positional relationship between the first layer 10 and the conductive layer 30, and are independent of the direction of gravity.

The first layer 10 includes a compound (a hydride-ion-conducting material) in which hydride ions can diffuse at high speed. Although not particularly limited, the ionic conductivity of the hydride ions in the hydride-ion-conducting material at 300 °C is, for example, not less than 1.0×10⁻⁴ S/cm (siemens/centimeter), and favorably not less than 1.0×10⁻² S/cm.

Specifically, the hydride-ion-conducting material can include an oxyhydride including lanthanum (La), strontium (Sr), lithium (Li), hydrogen (H), and oxygen (O), e.g., La_{2-*x-y*}Sr_{*x*+*y*}LiH_{1-*x*+*y*}O_{3-*y*}. Or, the hydride-ion-conducting material can include an oxyhydride including barium (Ba), Li, H, and O, e.g., Ba_{1.8}LiH_{2.8}O_{0.9}. The hydride-ion-conducting material may be a hydride of an alkaline earth metal of MHz (M being at least one of calcium (Ca), Sr, or Ba).

The conductive layer 30 and the conductive layer 50 are, for example, electrodes that include metals.

The conductive layer 30 can include, for example, at least one of titanium (Ti), palladium (Pd), platinum (Pt), gold (Au), Cu (copper), or silver (Ag). In the example, the conductive layer 30 includes Ti.

The conductive layer 50 can include, for example, at least one of titanium (Ti), palladium (Pd), platinum (Pt), gold (Au), Cu (copper), or silver (Ag). In the example, the conductive layer 50 includes Pd.

The protective film 20 suppresses direct contact and reactions between the conductive layer 30 and the first layer 10. The chemical reactivity of the protective film 20 to the hydride-ion-conducting material is less than the chemical reactivity of the conductive layer 30 to the hydride-ion-conducting material. That is, the material of the protective film 20 is less likely to change when in contact with the hydride-ion-conducting material than the material of the conductive layer 30. Similarly, the protective film 40 suppresses direct contact and reactions between the conductive layer 50 and the first layer 10. The protective film 20 and the protective film 40 can include, for example, a nitride, oxide, or sulfide.

FIG. 2 is a schematic cross-sectional view illustrating the hydride-ion-conducting device according to the embodiment. FIG. 2 shows an enlarged region R1 shown in FIG. 1. As illustrated in FIG. 2, an upper surface 10a of the first layer 10 includes an unevenness. In other words, the first layer 10 includes multiple protrusions 11 protruding upward. The protrusions 11 are, for example, conical or frustum-shaped.

The multiple protrusions 11 may include high protrusions 11, and protrusions 11 that are lower than the high protrusions 11. The multiple protrusions 11 include multiple protrusions 11a that extend highest among the multiple protrusions 11. The height of one protrusion 11a is substantially equal to the height of another protrusion 11a adjacent to the one protrusion 11a.

The protective film 20 includes a first protective layer 21 and a second protective layer 22. The first protective layer 21 is located on the upper surface 10a of the first layer 10. The first protective layer 21 encloses the unevenness of the upper surface 10a of the first layer 10. In other words, the first protective layer 21 is disposed between the protrusions 11 (in other words, on the recesses) to fill the unevenness of the upper surface 10a of the first layer 10.

An upper surface 21a of the first protective layer 21 is aligned with upper ends 11t of the protrusions 11a in the X-direction. For example, the Z-direction position of the upper surface 21a is the same as the Z-direction position of the upper ends 11t. The upper surface 21a extends along the X-Y plane. The roughness of the upper surface 21a of the first protective layer 21 is less than the roughness of the upper surface 10a of the first layer 10. That is, the upper surface 21a of the first protective layer 21 has higher flatness than the upper surface 10a of the first layer 10. The upper surface 21a of the first protective layer 21 may be substantially planar.

The second protective layer 22 is located on the first layer 10 and on the upper surface 21a of the first protective layer 21. The second protective layer 22 contacts the upper ends 11t of the protrusions 11a. In the example, the first protective layer 21 and the second protective layer 22 include titanium nitride. The material of the first protective layer 21 and the material of the second protective layer 22 may be the same or different from each other.

The second protective layer 22 is thinner than the first protective layer 21. In other words, a length T22 along the Z-direction of the second protective layer 22 is less than a length T21 along the Z-direction of the first protective layer 21. The thickness (the length T21) of the first protective layer 21 is, for example, not less than 10 nm and not more than 1,000 nm. The thickness of the first protective layer 21 may be equal to a height T11a of the protrusion 11a. The thickness (the length T22) of the second protective layer 22 is, for example, not less than 5 nm and not more than 500 nm.

The conductive layer 30 is located on the second protective layer 22. The protective film 20 is not always limited to a two-layer structure and may have three or more layers. For example, the first protective layer 21 may have a multilayer structure; and the second protective layer 22 may have a multilayer structure.

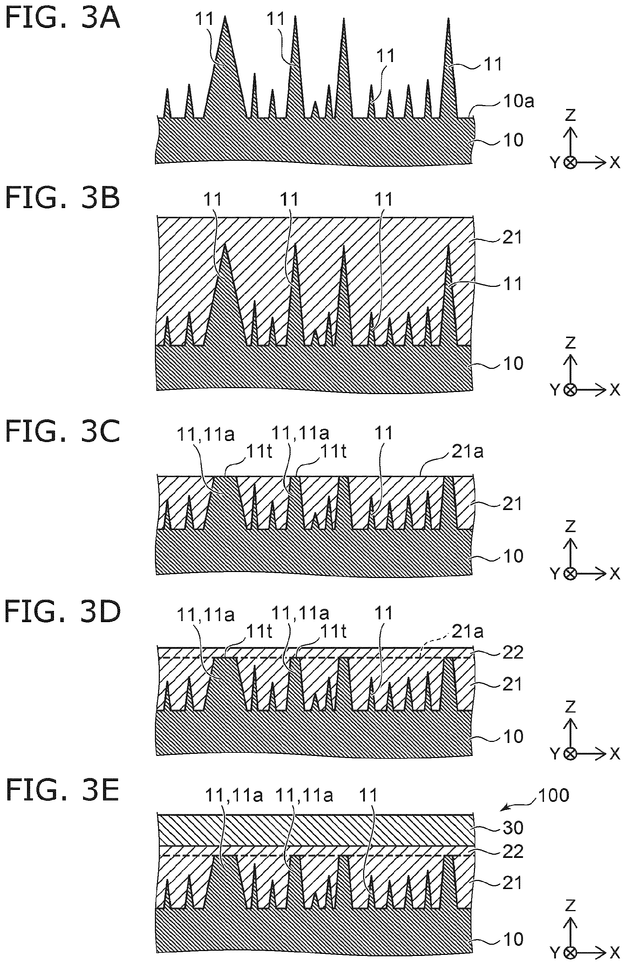

FIGS. 3A to 3E are schematic cross-sectional views illustrating a method for manufacturing the hydride-ion-conducting device according to the embodiment.

First, as illustrated in FIG. 3A, the first layer 10 that includes a hydride-ion-conducting material is prepared. Before performing a polishing process described below, a maximum height Rz of the upper surface 10a of the first layer 10 is, for example, not less than 1 nm and not more than 20 nm; and an arithmetic average roughness Ra of the upper surface 10a of the first layer 10 is, for example, not less than 0.5 nm and not more than 10 nm.

As illustrated in FIG. 3B, the first protective layer 21 is formed on the upper surface 10a of the first layer 10 by, for example, sputtering or the like (a first stacking process). In this state, the first protective layer 21 is greater than the height of the protrusions 11 of the first layer 10. In other words, in the first stacking process, the first protective layer 21 is provided to be higher than the protrusions 11 to cover all of the protrusions 11.

Subsequently, as illustrated in FIG. 3C, the upper surface of the first protective layer 21 is planarized by polishing (a polishing process). For example, in the polishing process, the first protective layer 21 is polished until the upper ends of the protrusions 11 of the first layer 10 are exposed. The polishing process may polish the upper ends of the multiple protrusions 11 simultaneously with the first protective layer 21. Thus, the upper surface 21a of the first protective layer 21 is aligned with the upper ends 11t of the protrusions 11a in the X-direction. The upper ends 11t of the protrusions 11a may have a planar shape extending along the X-Y plane.

Subsequently, as illustrated in FIG. 3D, the second protective layer 22 is formed on the polished upper surface 21a of the first protective layer 21 (and on the upper ends 11t of the protrusions 11a) by, for example, sputtering or the like (a second stacking process). As illustrated in FIG. 3E, the conductive layer 30 is formed on the second protective layer 22 by, for example, sputtering, etc. Thus, the hydride-ion-conducting device 100 can be formed.

For example, after the polishing process, the arithmetic average roughness Ra of the upper surface 21a of the first protective layer 21 is, for example, not less than 0.5 nm and not more than 10 nm, and favorably not more than 10 nm. After the polishing process, the maximum height Rz of the upper surface 10a of the first layer 10 (corresponding to the height T11a of the protrusions 11a illustrated in FIG. 2) is, for example, not less than 1 nm and not more than 20 nm; and the arithmetic average roughness Ra of the upper surface 10a of the first layer 10 is, for example, not less than 0.5 nm and not more than 10 nm. The cross section of the Z-X plane is observed to evaluate the unevenness. The parameters defined in JIS B 0601:2001 are used for the arithmetic average roughness Ra and the maximum height Rz. The reference length when measuring the parameters is, for example, not less than about 1 µm and not more than about 5 µm.

Operations of the hydride-ion-conducting device 100 will now be described.

FIG. 4 is a schematic view describing an operation of the hydride-ion-conducting device according to the embodiment. In the example, the hydride-ion-conducting device 100 functions as a device that absorbs hydrogen. A current is caused to flow by applying, to one side of the first layer 10 (in the example, the conductive layer 30), a voltage that is negative with respect to the other side of the first layer 10 (in the example, the conductive layer 50). When hydrogen is supplied to the negative side at this time, the hydrogen passes through the conductive layer and the protective film and is absorbed by the first layer 10 as hydride ions. In other words, in the example, the hydrogen passes through the conductive layer 30 and the protective film 20, and is incorporated into the first layer 10 as hydride ions.

The hydride-ion-conducting device according to the embodiment is not always limited to a hydrogen storage device. It is sufficient for the hydride-ion-conducting device according to the embodiment to be a device in which an electrode (a protective layer or conductive layer) is located at a hydride-ion-conducting material; and any function may be performed. For example, the hydride-ion-conducting device may be a secondary battery or a fuel cell. The hydride-ion-conducting device may be a device that synthesizes and/or dehydrogenates hydrogen carriers.

Effects of the embodiment will now be described.

The hydride-ion-conducting material is highly deliquescent. In contrast, according to the embodiment, the first protective layer 21 and the second protective layer 22 are located on the first layer 10. By covering the first layer 10 with the protective film 20 (the first protective layer 21 and the second protective layer 22), deliquescence of the hydride-ion-conducting material can be suppressed.

On the other hand, there are cases where a large unevenness exists in the surface of the hydride-ion-conducting material. For example, the first layer 10 includes the multiple protrusions 11. There are cases where the protective film becomes thick when forming the protective film to cover the unevenness of such a surface. When the protective film is thick, there is a risk that the ion conductivity may be degraded by the protective film; and the device performance may degrade. In other words, for example, the hydride ions or hydrogen no longer pass through the protective film easily, and so it may be difficult for the layer including the hydride-ion-conducting material to absorb or desorb hydrogen.

In contrast, according to the embodiment as described above, a relatively thick first protective layer 21 is formed on the protrusions 11 (the first stacking process). Then, the first protective layer 21 is planarized by polishing (the polishing process). As a result, the upper surface 21a of the first protective layer 21 extends in the first direction (e.g., the X-direction) crossing the upward direction, and is aligned with the upper ends 11t of the protrusions 11 in the first direction. For example, the roughness of the upper surface 21a of the first protective layer 21 is less than the roughness of the upper surface 10a of the first layer 10. Thus, the protective film can be made thin by polishing the first protective layer 21; and degradation of the ion conductivity (a reduction of the device performance) can be suppressed. As a result, in other words, the reduction of the ease of the hydride ions or hydrogen passing through the protective film 20 can be suppressed.

Then, the second protective layer 22 is located on the polished first protective layer 21 (the second stacking process). As a result, the surface of the first layer 10 can be covered with the first and second protective layers 21 and 22 more reliably while suppressing the thickness of the first protective layer 21; and deliquescence of the hydride-ion-conducting material can be suppressed. According to the embodiment, deliquescence of the hydride-ion-conducting material can be suppressed while maintaining ion conductivity (the protective film can be thinned).

As described above, the second protective layer 22 is thinner than the first protective layer 21. By making the second protective layer 22 relatively thin, degradation of the ion conductivity due to the second protective layer 22 can be suppressed. The thickness of the entire protective film 20 can be made thin while suppressing deliquescence of the hydride-ion-conducting material. Because the roughness of the upper surface 21a of the first protective layer 21 is relatively small, the upper surface 10a of the first layer 10 and the upper surface 21a of the first protective layer 21 are easily covered more reliably with the second protective layer 22 even when the second protective layer 22 is thin. Accordingly, deliquescence of the hydride-ion-conducting material can be suppressed.

For example, the manufacturing of the hydride-ion-conducting device 100 is performed in a space (inside a chamber, etc.) that has low humidity and is isolated from the outside without exposing the first layer 10 to ambient air. Deliquescence can be suppressed thereby. For example, the processes described with reference to FIGS. 3A to 3E are performed under a prescribed atmosphere (a first atmosphere) that is dehumidified to suppress deliquescence of the hydride-ion-conducting material. The first atmosphere is a low-humidity environment that is more dehumidified than external ambient air. The humidity of the first atmosphere is controlled to be not more than a prescribed value to suppress deliquescence of the hydride-ion-conducting material. At least a portion of the processes of FIGS. 3A to 3E may be performed continuously inside the same space.

With respect to the first atmosphere, the "suppression of deliquescence" means that deliquescence that would cause the loss of function as a device does not occur. The state of deliquescence being suppressed may include not only when deliquescence does not occur completely, but also when deliquescence that degrades the performance within a practical allowable range of the product occurs.

Specifically, the dew point of the first atmosphere is, for example, not less than -70 °C and not more than -20 °C, and favorably not more than -60 °C. The temperature of the first atmosphere is set to be, for example, not less than 20 °C and not more than 400 °C.

The first atmosphere may be an inert gas atmosphere. In other words, the processes may be performed inside a space in which the air is replaced with an inert gas. The inert gas can include, for example, argon or nitrogen.

The upper surface 21a of the first protective layer 21 (the interface between the first protective layer 21 and the second protective layer 22) may not always be distinctly observable in the cross section of the hydride-ion-conducting device. When the upper surface 21a of the first protective layer 21 cannot be distinctly observed, a surface that extends along the X-Y plane through the upper ends 11t of the protrusions 11a (the highest protrusions 11) can be considered to be the upper surface 21a.

FIG. 5 is a schematic cross-sectional view illustrating the hydride-ion-conducting device according to the embodiment. FIG. 5 shows an enlarged region R2 shown in FIG. 1. The lower side of the first layer 10 (a lower surface 10b, the protective film 40, and the conductive layer 50) may have a configuration similar to that of the upper side of the first layer 10 (the upper surface 10a, the protective film 20, and the conductive layer 30). In other words, the lower surface 10b of the first layer 10 includes an unevenness. The first layer 10 includes multiple protrusions 12 protruding downward. The multiple protrusions 12 include multiple protrusions 12a extending most downward among the multiple protrusions 12.

The protective film 40 includes a protective layer 41 and a protective layer 42. The protective layer 41 is formed in contact with the lower surface 10b of the first layer 10. The protective layer 41 encloses the unevenness of the lower surface 10b of the first layer 10. A lower surface 41a of the protective layer 41 is aligned with lower ends 12t of the protrusions 12a in the X-direction. The lower surface 41a extends along the X-Y plane. The roughness of the lower surface 41a of the protective layer 41 is less than the roughness of the lower surface 10b of the first layer 10. The protective layer 42 is formed in contact with the lower ends 12t of the protrusions 12a and the lower surface 41a of the protective layer 41. The protective layer 42 is thinner than the protective layer 41. The conductive layer 50 is formed in contact with the lower surface of the protective layer 42.

The protective layer 41, the protective layer 42, and the conductive layer 50 can be formed by techniques similar to the protective layer 21, the protective layer 22, and the conductive layer 30.

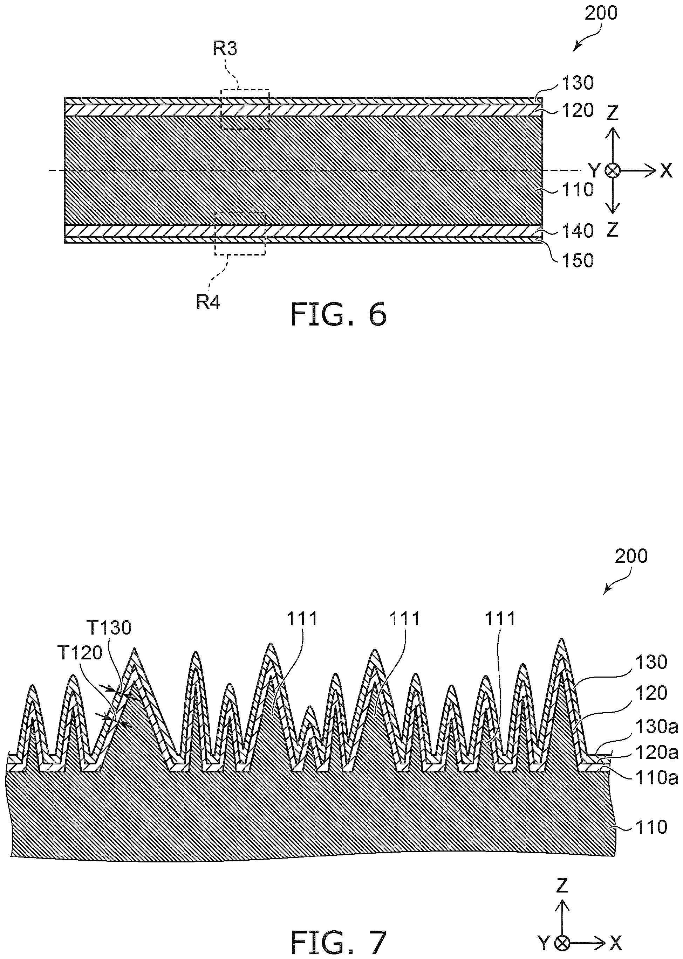

FIG. 6 is a schematic cross-sectional view illustrating a hydride-ion-conducting device according to the embodiment.

As illustrated in FIG. 6, the hydride-ion-conducting device 200 according to the embodiment includes a first layer 110 including a hydride-ion-conducting material, a protective layer 120 located on the first layer 110, and a conductive layer 130 located on the protective layer 120. In the example, a protective layer 140 is located under the first layer 110; and a conductive layer 150 is located under the protective layer 140.

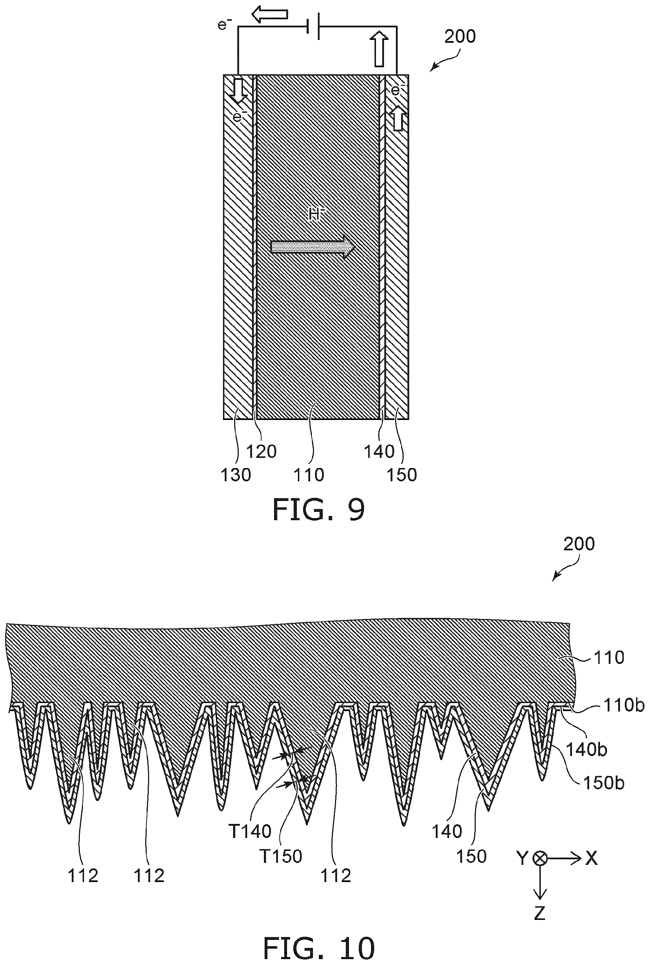

As described below, the surfaces of the layers include unevennesses, but the unevennesses are not illustrated for convenience in FIG. 6 (and FIG. 9).

In the description of the embodiment, the direction from the first layer 110 toward the conductive layer 130 is taken as the Z-direction; one direction perpendicular to the Z-direction is taken as the X-direction (the first direction); and a direction perpendicular to the Z-direction and X-direction is taken as the Y-direction. In the description, the direction from the first layer 110 toward the conductive layer 130 is defined as "up/upward/higher than", and the opposite direction is defined as "down/downward/lower than". These directions are based on the relative positional relationship between the first layer 110 and the conductive layer 130, and are independent of the direction of gravity.

The first layer 110 includes a compound (a hydride-ion-conducting material) in which hydride ions can diffuse at high speed. Although not particularly limited, the ionic conductivity of the hydride ions in the hydride-ion-conducting material at 300 °C is, for example, not less than 1.0×10⁻⁴ S/cm (siemens/centimeter), and favorably not less than 1.0×10⁻² S/cm.

Specifically, the hydride-ion-conducting material can include an oxyhydride including lanthanum (La), strontium (Sr), lithium (Li), hydrogen (H), and oxygen (O), e.g., La_{2-*x-y*}Sr_{*x*+*y*}LiH_{1-*x*+*y*}O_{3-*y*}. Or, the hydride-ion-conducting material can include an oxyhydride including barium (Ba), Li, H, and O, e.g., Ba_{1.8}LiH_{2.8}O_{0.9}. The hydride-ion-conducting material may be a hydride of an alkaline earth metal of MHz (*M* being at least one of calcium (Ca), Sr, or Ba).

The conductive layer 130 and the conductive layer 150 are, for example, electrodes that include metals.

The conductive layer 130 can include, for example, at least one of titanium (Ti), palladium (Pd), platinum (Pt), gold (Au), Cu (copper), or silver (Ag). In the example, the conductive layer 30 includes Ti.

The conductive layer 150 can include, for example, at least one of titanium (Ti), palladium (Pd), platinum (Pt), gold (Au), Cu (copper), or silver (Ag). In the example, the conductive layer 150 includes Pd.

The protective layer 120 suppresses direct contact and reactions between the conductive layer 130 and the first layer 110. The chemical reactivity of the protective layer 120 to the hydride-ion-conducting material is less than the chemical reactivity of the conductive layer 130 to the hydride-ion-conducting material. That is, the material of the protective layer 120 is less likely to change when in contact with the hydride-ion-conducting material than the material of the conductive layer 130. Similarly, the protective layer 140 suppresses direct contact and reactions between the conductive layer 150 and the first layer 110. The protective layer 120 and the protective layer 140 can include, for example, a nitride, oxide, or sulfide.

FIG. 7 is a schematic cross-sectional view illustrating the hydride-ion-conducting device according to the embodiment.

FIG. 7 shows an enlarged region R3 shown in FIG. 6. As illustrated in FIG. 7, an upper surface 110a of the first layer 110 includes an unevenness. In other words, the first layer 110 includes multiple protrusions 111 protruding upward. The protrusions 111 are, for example, conical. The heights of the multiple protrusions 111 may be different from each other. The arithmetic average roughness Ra of the upper surface 110a of the first layer 110 is, for example, not less than 0.5 nm and not more than 10 nm. The maximum height Rz of the upper surface 110a of the first layer 110 is, for example, not less than 1 nm and not more than 20 nm.

The protective layer 120 follows the unevenness of the first layer 110 and covers the recesses and protrusions of the first layer 110. In other words, an upper surface 120a of the protective layer 120 includes an unevenness that follows the unevenness of the upper surface 110a of the first layer 110. The roughness of the upper surface 120a of the protective layer 120 may be substantially equal to the roughness of the upper surface 110a of the first layer 110. For example, the arithmetic average roughness Ra of the upper surface 120a follows the arithmetic average roughness Ra of the upper surface 110a. In the example, the protective layer 120 includes titanium nitride. The protective layer is not limited to a single-layer, and may have a multilayer structure.

The conductive layer 130 follows the unevenness of the protective layer 120, and covers the recesses and protrusions of the protective layer 120. In other words, an upper surface 130a of the conductive layer 130 includes an unevenness that follows the unevenness of the upper surface 120a of the protective layer 120. The roughness of the upper surface 130a of the conductive layer 130 may be substantially equal to the roughness of the upper surface 120a of the protective layer 120. For example, the arithmetic average roughness Ra of the upper surface 130a follows the arithmetic average roughness Ra of the upper surface 120a.

The thickness (a length T120) of the protective layer 120 is less than the heights (the lengths in the vertical direction) of the protrusions 111 of the first layer 110. The length T120 of the protective layer 120 at one location is the length at the one location along a direction perpendicular to the upper surface 120a at the one location. For example, the length T120 is less than the maximum height Rz of the upper surface 110a of the first layer 110. The length T120 is, for example, not less than 0.5 nm and not more than 10 nm. For example, the length T120 may be less than the arithmetic average roughness Ra of the upper surface 110a of the first layer 110.

The thickness (a length T130) of the conductive layer 130 is less than the heights of the protrusions 111 of the first layer 110. The length T130 of the conductive layer 130 at one location is the length at the one location along a direction perpendicular to the upper surface 130a at the one location. For example, the length T130 is less than the maximum height Rz of the upper surface 110a of the first layer 110. The length T130 is, for example, not less than 0.5 nm and not more than 10 nm. For example, the length T130 may be less than the arithmetic average roughness Ra of the upper surface 110a of the first layer 110.

The cross section of the Z-X plane is observed to evaluate the unevenness. The parameters defined in JIS B 0601:2001 are used for the arithmetic average roughness Ra and the maximum height Rz. The reference length when measuring the parameters is, for example, not less than about 1 µm and not more than about 5 µm.

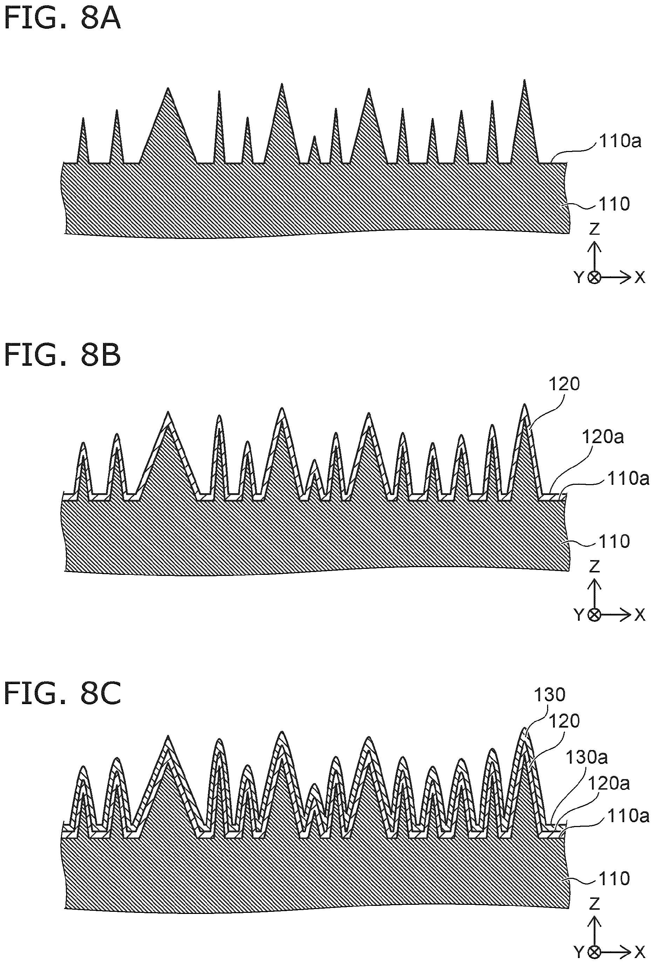

FIGS. 8A to 8C are schematic cross-sectional views illustrating a method for manufacturing the hydride-ion-conducting device according to the embodiment.

First, as illustrated in FIG. 8A, the first layer 110 that includes a hydride-ion-conducting material is prepared.

As illustrated in FIG. 8B, the protective layer 120 is formed to contact the upper surface 110a of the first layer 110 by, for example, sputtering or the like (the first stacking process). The protective layer 120 covers the entire upper surface 110a of the first layer 110. The thickness of the protective layer 120 may be constant along the unevenness of the upper surface 110a. The protective layer 120 may be thicker at the dale bottoms or hill peaks of the protective layer 120 than at the other portions.

Subsequently, as illustrated in FIG. 8C, the conductive layer 30 is formed to contact the upper surface of the protective layer 120 by, for example, sputtering or the like (the second stacking process). Thus, the hydride-ion-conducting device 200 can be formed. The thickness of the conductive layer 130 may be constant along the unevenness of the upper surface 120a. The conductive layer 130 may be thicker at the dale bottoms or hill peaks of the conductive layer 130 than at the other portions.

Operations of the hydride-ion-conducting device 200 will now be described.

FIG. 9 is a schematic view describing an operation of the hydride-ion-conducting device according to the embodiment. In the example, the hydride-ion-conducting device 200 functions as a device that absorbs hydrogen. A current is caused to flow by applying, to one side of the first layer 110 (in the example, the conductive layer 130), a voltage that is negative with respect to the other side of the first layer 110 (in the example, the conductive layer 150). When hydrogen is supplied to the negative side at this time, the hydrogen passes through the conductive layer and the protective layer and is absorbed by the first layer 110 as hydride ions. In other words, in the example, the hydrogen passes through the conductive layer 130 and the protective layer 120, and is incorporated into the first layer 110 as hydride ions.

The hydride-ion-conducting device according to the embodiment is not always limited to a hydrogen storage device. It is sufficient for the hydride-ion-conducting device according to the embodiment to be a device in which an electrode (a protective layer or conductive layer) is located at a hydride-ion-conducting material; and any function may be performed. For example, the hydride-ion-conducting device may be a secondary battery or a fuel cell. The hydride-ion-conducting device may be a device that synthesizes and/or dehydrogenates hydrogen carriers.

Effects of the embodiment will now be described.

The hydride-ion-conducting material is highly deliquescent. In contrast, according to the embodiment, the protective layer 120 is located on the first layer 110. By covering the first layer 110 with the protective layer 120, deliquescence of the hydride-ion-conducting material can be suppressed.

On the other hand, there are cases where a large unevenness exists at the surface of the hydride-ion-conducting material. For example, the first layer 110 includes the multiple protrusions 111. There are cases where the protective layer becomes thick when forming the protective layer to cover the unevenness of such a surface. When the protective layer is thick, there is a risk that the ion conductivity may be degraded by the protective layer; and the device performance may degrade. In other words, for example, the hydride ions or hydrogen no longer pass through the protective layer easily, and so it may be difficult for the layer including the hydride-ion-conducting material to absorb or desorb hydrogen.

In contrast, according to the embodiment, the upper surface 120a of the protective layer 120 includes an unevenness that follows the unevenness of the upper surface 110a of the first layer 110. For example, the protective layer 120 is formed thin enough that the unevenness of the upper surface 110a of the first layer 110 is reflected in the upper surface 120a of the protective layer 120. For example, the thickness of the protective layer 120 is less than the heights of the protrusions 111 of the first layer 110. Thus, because the protective layer 120 is relatively thin, degradation of the ion conductivity of the protective layer 120 (a reduction of the device performance) can be suppressed. In other words, the reduction of the ease of the hydride ions or hydrogen passing through the protective layer 120 can be suppressed.

Thus, according to the embodiment, by including the protective layer 120, the protective layer 120 is prevented from becoming too thick while suppressing deliquescence of the hydride-ion-conducting material. Accordingly, deliquescence of the hydride-ion-conducting material can be suppressed while maintaining ion conductivity.

Similarly, the upper surface 130a of the conductive layer 130 includes an unevenness that follows the unevenness of the upper surface 120a of the protective layer 120. For example, the conductive layer 130 is formed to be thin enough that the unevenness of the upper surface 120a of the protective layer 120 is reflected in the upper surface 130a of the conductive layer 130. For example, the thickness of the conductive layer 130 is less than the heights of the protrusions 111 of the first layer 110. Thus, by making the conductive layer 130 relatively thin, degradation of the ion conductivity of the conductive layer 130 can be suppressed. In other words, the reduction of the ease of hydride ions or hydrogen passing through the conductive layer 30 can be suppressed.

The thickness (the length T120) of the protective layer 120 may be greater than the thickness (a length T30) of the conductive layer 30. When the length T120 is long, the first layer 110 can be covered with the protective layer 120 more reliably, and deliquescence can be further suppressed.

The thickness (the length T120) of the protective layer 120 may be less than the thickness (the length T130) of the conductive layer 130. When the length T120 is thin, degradation of the ion conductivity of the protective layer 120 can be suppressed.

For example, the manufacturing of the hydride-ion-conducting device 200 is performed in a space (inside a chamber, etc.) that has low humidity and is isolated from the outside without exposing the first layer 110 to ambient air. Deliquescence can be suppressed thereby. For example, the processes described with reference to FIGS. 8A to 8C are performed under a prescribed atmosphere (the first atmosphere) that is dehumidified to suppress deliquescence of the hydride-ion-conducting material. The first atmosphere is a low-humidity environment that is more dehumidified than external ambient air. The humidity of the first atmosphere is controlled to be not more than a prescribed value to suppress deliquescence of the hydride-ion-conducting material. At least a portion of the processes of FIGS. 8A to 8C may be performed continuously inside the same space.

With respect to the first atmosphere, the "suppression of deliquescence" means that deliquescence that would cause the loss of function as a device does not occur. The state of deliquescence being suppressed may include not only when deliquescence does not occur completely, but also when deliquescence that degrades the performance within a practical allowable range of the product occurs.

Specifically, the dew point of the first atmosphere is, for example, not less than -70 °C and not more than -20 °C, and favorably not more than -60 °C. The temperature of the first atmosphere is set to be, for example, not less than 20 °C and not more than 400 °C.

The first atmosphere may be an inert gas atmosphere. In other words, the processes may be performed inside a space in which the air is replaced with an inert gas. The inert gas can include, for example, argon or nitrogen.

FIG. 10 is a schematic cross-sectional view illustrating the hydride-ion-conducting device according to the embodiment. FIG. 10 shows an enlarged region R4 shown in FIG. 6. The lower side of the first layer 110 (a lower surface 110b, the protective layer 140, and the conductive layer 150) may have a configuration similar to that of the upper side of the first layer 110 (the upper surface 110a, the protective layer 120, and the conductive layer 130).

In other words, the lower surface 110b of the first layer 110 includes an unevenness. The first layer 110 includes multiple protrusions 112 protruding downward. The protective layer 140 is formed in contact with the lower surface 110b of the first layer 110. A lower surface 140b of the protective layer 140 includes an unevenness that follows the unevenness of the lower surface 110b of the first layer 110. A lower surface 150b of the conductive layer 150 is formed in contact with the lower surface 140b of the protective layer 140. The lower surface 150b of the conductive layer 150 includes an unevenness that follows the unevenness of the lower surface 140b of the protective layer 140. The thickness (a length T140) of the protective layer 140 is less than the heights (the Z-direction lengths) of the protrusions 112 of the first layer 110. The thickness (a length T150) of the conductive layer 150 is less than the heights of the protrusions 112 of the first layer 110.

The protective layer 140 and the conductive layer 150 can be formed using techniques similar to those of the protective layer 120 and the conductive layer 130.

According to embodiments, a hydride-ion-conducting device and a method for manufacturing a hydride-ion-conducting device can be provided in which deliquescence can be suppressed. For example, the trade-off between suppressing deliquescence and maintaining ion conductivity can be overcome.

Embodiments may include the following configurations.
Configuration 1 A hydride-ion-conducting device, comprising:
   a first layer including a hydride-ion-conducting material, the first layer including a protrusion protruding in an upward direction;
   a first protective layer located on the first layer, the first protective layer including an upper surface extending in a first direction crossing the upward direction, the upper surface of the first protective layer being aligned with an upper end of the protrusion in the first direction;
   a second protective layer located on the first layer and on the first protective layer; and
   a conductive layer located on the second protective layer.
Configuration 2 The device according to configuration 1, wherein
   the second protective layer is thinner than the first protective layer.
Configuration 3 The device according to configuration 1 or 2, wherein
   a roughness of the upper surface of the first protective layer is less than a roughness of an upper surface of the first layer.
Configuration 4 The device according to configuration 3, wherein
   an arithmetic average roughness Ra of the upper surface of the first protective layer is not more than 10 µm.
Configuration 5 A method for manufacturing a hydride-ion-conducting device, the method comprising:
   a first stacking process of forming a first protective layer on a first layer, the first layer including a hydride-ion-conducting material, the first layer including a protrusion protruding in an upward direction, the first protective layer being greater than a height of the protrusion;
   a polishing process of planarizing an upper surface of the first protective layer by polishing; and
   a second stacking process of forming a second protective layer on the polished upper surface of the first protective layer.
Configuration 6 The method according to configuration 5, wherein
   the polishing process polishes the first protective layer so that the upper surface of the first protective layer is aligned with an upper end of the protrusion in a first direction crossing the upward direction.
Configuration 7 The method according to configuration 5 or 6, wherein
   the first stacking process, the polishing process, and the second stacking process are performed in a first atmosphere dehumidified to suppress deliquescence of the hydride-ion-conducting material.
Configuration 8 A hydride-ion-conducting device, comprising:
   a first layer including a hydride-ion-conducting material, the first layer including an upper surface including an unevenness;
   a protective layer located on the upper surface of the first layer; and
   a conductive layer located on the protective layer,
   an upper surface of the protective layer including an unevenness following the unevenness of the upper surface of the first layer.
Configuration 9 The device according to configuration 8, wherein
   the first layer includes a protrusion protruding in an upward direction, and
   a thickness of the protective layer is less than a length in a vertical direction of the protrusion.
Configuration 10 The device according to configuration 8 or 9, wherein
   an upper surface of the conductive layer includes an unevenness following the unevenness of the upper surface of the protective layer.
Configuration 11 A method for manufacturing a hydride-ion-conducting device, the method comprising:
   a first stacking process of forming a protective layer on a first layer,
   the first layer including a hydride-ion-conducting material,
   the first layer including an upper surface including an unevenness,
   the first stacking process being performed in a first atmosphere dehumidified to suppress deliquescence of the hydride-ion-conducting material,
   an upper surface of the protective layer including an unevenness following the unevenness of the upper surface of the first layer.
Configuration 12 The method according to configuration 11, wherein
   a dew point temperature of the first atmosphere is not more than -20 °C.
Configuration 13 The method according to configuration 11 or 12, wherein
   the first atmosphere is an inert gas atmosphere.
Configuration 14 The method according to any one of configurations 11 to 13, further comprising:
   a second stacking process of forming a conductive layer on the protective layer,
   the second stacking process being performed in the first atmosphere.

In the specification of the application, "perpendicular" refers to not only strictly perpendicular but also includes, for example, the fluctuation due to manufacturing processes, etc. It is sufficient to be substantially perpendicular.

Being "substantially the same" or "substantially equal" is not limited to being exactly the same or equal, and includes slight differences within the range of manufacturing condition fluctuation, etc.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention. Additionally, the embodiments described above can be combined mutually.

## Claims

1. A hydride-ion-conducting device (100), comprising:
a first layer (10) including a hydride-ion-conducting material, the first layer (10) including a protrusion (11) protruding in an upward direction;
a first protective layer (21) located on the first layer (10), the first protective layer (21) including an upper surface (21a) extending in a first direction crossing the upward direction, the upper surface (21a) of the first protective layer (21) being aligned with an upper end (11t) of the protrusion (11) in the first direction;
a second protective layer (22) located on the first layer (10) and on the first protective layer (21); and
a conductive layer (30) located on the second protective layer (22).

2. The device (100) according to claim 1, wherein
the second protective layer (22) is thinner than the first protective layer (21).

3. The device (100) according to claim 1 or 2, wherein
a roughness of the upper surface (21a) of the first protective layer (21) is less than a roughness of an upper surface (10a) of the first layer (10).

4. The device (100) according to claim 3, wherein
an arithmetic average roughness Ra of the upper surface (21a) of the first protective layer (21) is not more than 10 µm.

5. A method for manufacturing a hydride-ion-conducting device (100), the method comprising:
a first stacking process of forming a first protective layer (21) on a first layer (10), the first layer (10) including a hydride-ion-conducting material, the first layer (10) including a protrusion (11) protruding in an upward direction, the first protective layer (21) being greater than a height of the protrusion (11);
a polishing process of planarizing an upper surface (21a) of the first protective layer (21) by polishing; and
a second stacking process of forming a second protective layer (22) on the polished upper surface (21a) of the first protective layer (21).

6. The method according to claim 5, wherein
the polishing process polishes the first protective layer (21) so that the upper surface (21a) of the first protective layer (21) is aligned with an upper end (11t) of the protrusion (11) in a first direction crossing the upward direction.

7. The method according to claim 5 or 6, wherein
the first stacking process, the polishing process, and the second stacking process are performed in a first atmosphere dehumidified to suppress deliquescence of the hydride-ion-conducting material.

8. A hydride-ion-conducting device (200), comprising:
a first layer (110) including a hydride-ion-conducting material, the first layer (110) including an upper surface (110a) including an unevenness;
a protective layer (120) located on the upper surface (110a) of the first layer (110); and
a conductive layer (130) located on the protective layer (120),
an upper surface (120a) of the protective layer (120) including an unevenness following the unevenness of the upper surface (110a) of the first layer (110).

9. The device (200) according to claim 8, wherein
the first layer (110) includes a protrusion (111) protruding in an upward direction, and
a thickness of the protective layer (120) is less than a length in a vertical direction of the protrusion (111).

10. The device (200) according to claim 8 or 9, wherein
an upper surface (130a) of the conductive layer (130) includes an unevenness following the unevenness of the upper surface (120a) of the protective layer (120).

11. A method for manufacturing a hydride-ion-conducting device (200), the method comprising:
a first stacking process of forming a protective layer (120) on a first layer (110),
the first layer (110) including a hydride-ion-conducting material,
the first layer (110) including an upper surface (110a) including an unevenness,
the first stacking process being performed in a first atmosphere dehumidified to suppress deliquescence of the hydride-ion-conducting material,
an upper surface (120a) of the protective layer (120) including an unevenness following the unevenness of the upper surface (110a) of the first layer (110).

12. The method according to claim 11, wherein
a dew point temperature of the first atmosphere is not more than -20 °C.

13. The method according to claim 11 or 12, wherein
the first atmosphere is an inert gas atmosphere.

14. The method according to any one of claims 11 to 13, further comprising:
a second stacking process of forming a conductive layer (130) on the protective layer (120),
the second stacking process being performed in the first atmosphere.
